# FASCICULE DE BREVET EUROPEEN

(11) **EP 3 245 857 B1**
(45) Date de publication et mention de la délivrance du brevet: **20.03.2019**
(21) Numéro de dépôt: 17171214.4
(22) Date de dépôt: 16.05.2017
(51) Int. Cl.: A01B 63/14

(54) **MACHINE AGRICOLE COMPORTANT UN SYSTÈME DE REPORT DE CHARGE SÉCURISÉ**
GEZOGENE LANDWIRTSCHAFTLICHE MASCHINE AUSGESTATTET MIT EINEM GESICHERTEN SYSTEM ZUR BELASTUNGSÜBERTRAGUNG
DRAWN AGRICULTURAL MACHINE COMPRISING A SECURED LOAD CARRYING OVER SYSTEM

(30) Priorité: 19.05.2016 FR 1654472
(43) Date de publication de la demande: 22.11.2017
(73) Titulaire: Kuhn S.A., 67700 Saverne (FR)
(72) Inventeur: KOEPPEL, Frédéric, 67270 Hochfelden (FR)
(74) Mandataire: Esch, Esther Evelyne

(56) Documents cités:
- WO-A1-2009/061175
- DE-A1-102010 046 745
- FR-A1- 2 991 549

## Description

La présente invention se rapporte au domaine technique général du machinisme agricole. L'invention concerne une machine agricole traînée comportant un cadre porteur muni d'outils de traitement et pouvant être relié à l'attelage trois points d'un tracteur au moyen d'un cadre d'accouplement, le cadre porteur s'appuyant sur le sol au moins au transport au moyen de roues et un système de report de charge s'étendant entre le cadre porteur et le cadre d'accouplement pour exercer une force sur le cadre d'accouplement dans au moins une configuration dite intermédiaire dans laquelle une majorité des outils de traitement ne sont pas en contact avec le sol et sont disposés à l'arrière des roues.

Une telle machine est connue de l'homme de l'art par l'intermédiaire du document WO 2009/061175. Il s'agit d'une machine de fenaison, notamment d'une faneuse traînée équipée d'un élément de traction qui a pour fonction d'exercer une force sur les points d'attelage inférieurs du tracteur lors des manoeuvres. Cette faneuse dispose d'un cadre d'accouplement spécifique en deux parties reliées par un axe de pivotement parallèle à l'axe passant par les points d'attelage inférieurs. Cet axe transversal sensiblement horizontal permet à la machine de suivre le relief du terrain. A l'arrière de cet axe transversal s'étend un axe vertical permettant à la machine de suivre le tracteur notamment dans les virages et fourrières. L'axe vertical est distant de l'axe transversal, une telle distance rend la machine instable surtout dans les virages lors du transport. L'élément de traction est positionné dans l'espace entre l'axe transversal et l'axe vertical. Un distributeur hydraulique pilote un ou plusieurs vérins via un circuit hydraulique pour le passage d'une position de transport à une position de travail de la machine, et inversement. Ce distributeur dispose également d'une position flottante, qui permet à l'huile de circuler librement dans le circuit. La position flottante est utilisée au transport notamment pour apporter une souplesse à l'élément de traction de manière à libérer l'axe transversal.

Pour les manoeuvres en bout de champ, les outils de traitement sont soulevés et maintenus à distance du sol via le vérin de relevage. L'élément de traction est alimenté simultanément pour exercer une force sur le cadre d'accouplement. Lors de ces manoeuvres de demi-tour, l'utilisateur est concentré sur la conduite du tracteur pour placer la machine sur la bande de travail adjacente. Durant cette manoeuvre, l'utilisateur ne doit pas placer le distributeur en position flottante, puisqu'une telle manipulation entraînerait la chute des outils de traitement parce que la force exercée au niveau des points d'attelage inférieurs est annulée car l'huile peut s'échapper du vérin de relevage et s'écouler vers le réservoir du tracteur. Une mauvaise manipulation de l'utilisateur pourrait donc endommager les outils de traitement et/ou la machine. La chute des outils de traitement pourrait également être la source d'un accident.

La présente invention a pour but de remédier aux inconvénients précités. Elle doit notamment proposer une solution qui protège la machine et son environnement en cas d'une action inadéquate.

A cet effet, une importante caractéristique de l'invention consiste en ce que la machine agricole traînée comporte un dispositif apte à isoler le circuit hydraulique du système de report de charge dans la configuration dite intermédiaire. Grâce à ce dispositif d'isolation, l'échange d'huile entre le système de report de charge et le circuit de la machine est empêché. L'huile reste confinée dans le circuit du système de report de charge. Avec le dispositif d'isolation, une mise en position flottante du distributeur par l'utilisateur lors des manoeuvres de demi-tour n'aura pas d'incidence sur le système de report de charge et donc sur la force appliquée à l'avant du cadre porteur. Ce dispositif d'isolation a une fonction de sécurité pour la machine de fenaison lorsqu'elle est dans la configuration intermédiaire pour les manoeuvres.

Selon une autre caractéristique de l'invention, le circuit du système de report de charge comporte un sélecteur de circuit.

D'autres caractéristiques et avantages de l'invention se dégageront de la description qui va suivre en regard des dessins annexés qui ne sont donnés qu'à titre d'exemples non limitatifs de l'invention. Sur ces dessins :
- la **figure 1** représente une vue latérale d'une machine agricole traînée selon la présente invention dans une configuration dite intermédiaire, attelée à un tracteur,
- la **figure 2** représente une vue de détail de la figure 1,
- la **figure 3** représente une vue d'une partie de la machine dans une configuration de travail,
- la **figure 4** représente une vue d'une partie de la machine dans une configuration de transport,
- la **figure 5** représente une vue de détail de la figure 3,
- la **figure 6** représente une vue de détail de la figure 4.
- la **figure 7** représente le schéma hydraulique lorsque la machine est dans la configuration dite intermédiaire.

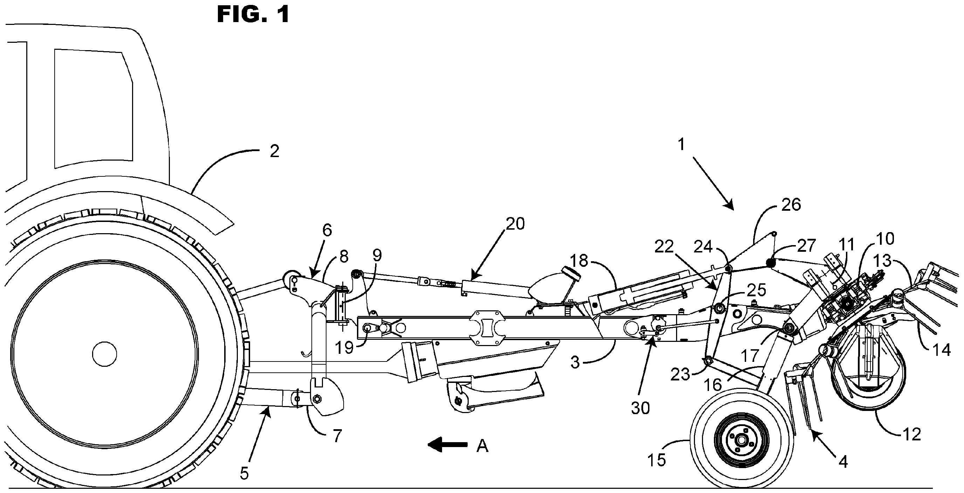

Telle que représentée sur la figure 1, la machine (1) selon l'invention est une machine agricole de fenaison du type faneuse de fourrage. Cette machine (1) est destinée à être attelée à un tracteur (2) servant à l'animer et à la déplacer dans une direction d'avancement (A). Dans la suite de la description, les notions « avant », « arrière », « devant » et « derrière » sont définies par rapport à la direction d'avancement (A), tandis que les notions « haut » et « bas » se rapportent au sol. La machine (1) comporte un cadre porteur (3) muni d'outils de traitement (4). Le cadre porteur (3) est relié à l'attelage trois points (5) du tracteur (2) au moyen d'un cadre d'accouplement (6). Le cadre d'accouplement (6) comprend deux attaches inférieures (7) et une attache supérieure (8). Ces attaches (7, 8) sont respectivement liées à l'attelage trois points (5) du tracteur (2). Le cadre d'accouplement (6) est articulé sur le cadre porteur (3) au moyen d'une articulation (9). Le cadre d'accouplement (6) s'étend à l'avant du cadre porteur (3) et les outils de traitement (4) s'étendent à l'arrière du cadre porteur (3).

Dans l'exemple d'une faneuse, l'outil de traitement (4) est un rotor de fanage permettant de soulever et d'étaler l'herbe fauchée pour accélérer son séchage. Chaque rotor de fanage possède un moyeu (10) monté rotatif sur un axe (11) qui est sensiblement vertical ou incliné dans la direction d'avancement (A). La partie supérieure de chaque axe (11) constitue l'axe de rotation du rotor correspondant, tandis que sa partie inférieure porte une roue (12) qui prend appui sur le sol dans la position de travail. Chaque moyeu (10) est muni de bras (13) qui s'étendent en forme de rayons et qui sont disposés à des distances sensiblement régulières les uns des autres. Chacun de ces bras porte à son extrémité éloignée du moyeu correspondant une fourche de travail (14). Dans la position de travail, les bras porte-fourches de chaque rotor pénètrent dans les intervalles entre les bras porte-fourches des rotors voisins de sorte que les trajectoires de leurs fourches de travail (14) se recouvrent partiellement.

Le cadre porteur (3) porte plusieurs outils de traitement (4) pouvant occuper une position de travail dans laquelle ils sont sensiblement perpendiculaires à la direction d'avancement (A) et une position de transport dans laquelle les outils de traitement (4) sont repliés vers l'avant en vue de réduire considérablement la largeur de la machine (1). Les outils de traitement (4) sont regroupés en deux parties latérales, lesquelles sont déplaçables au moyen de vérins hydrauliques (28) permettant ainsi de déployer les deux parties dans une position de travail et de les replier vers l'avant dans une position de transport. Les parties latérales sont articulées sur le cadre porteur (3) au moyen d'axes sensiblement verticaux autour desquels elles peuvent être déplacées avec tous les rotors vers l'avant dans la position de transport. Dans ce cas, la partie centrale fixée au cadre porteur (3) ne supporte pas d'outils de traitement (4). Chaque partie latérale porte huit rotors de fanage soit seize au total pour la machine. Ce nombre n'est donné qu'à titre d'exemple et peut varier en fonction de la largeur de travail recherchée. Pendant le travail, les rotors de fanage sont mis en rotation via un moyen moteur comportant, par exemple, un arbre de transmission principal conçu pour être relié à une prise de force du tracteur (2), ainsi que des arbres de transmissions intermédiaires sensiblement parallèles aux parties latérales à l'intérieur desquelles ils sont par exemple logés. Dans l'exemple de réalisation décrit, mais non représenté, deux rotors sont fixés sur un châssis central et les autres rotors sont répartis sur les deux parties latérales. Les parties latérales sont liées à une partie centrale via une articulation respective d'axe sensiblement horizontal et parallèle à la direction d'avance (A). La partie centrale est, quant à elle, liée au cadre porteur (3) au moyen d'une articulation d'axe sensiblement horizontal et perpendiculaire à la direction d'avance (A). Ainsi, pour le passage de la position de travail à la position de transport, les parties latérales sont d'abord repliées vers le haut via le vérin hydraulique (28) puis la partie centrale et les parties latérales basculent vers l'avant de la machine (1) grâce au vérin de relevage (18). Ces étapes sont faites dans le sens inverse pour le passage de la position de transport à la position de travail.

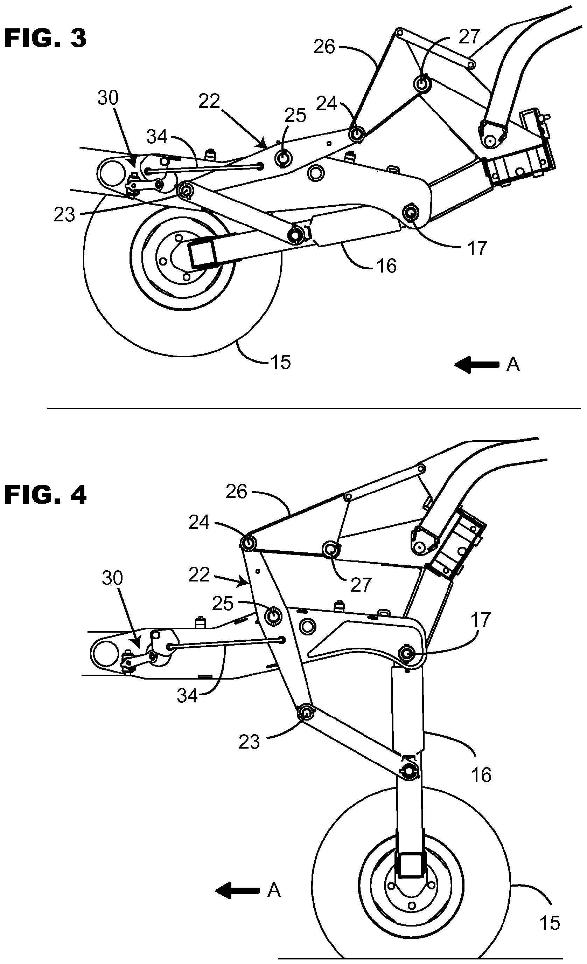

Cette machine (1) est notamment traînée lors des déplacements sur route. Ainsi, le cadre porteur (3) s'appuie sur le sol, au moins au transport, via des roues (15). Cette partie de la machine (1) est représentée, dans la configuration de transport, sur la figure 4. Les roues (15) sont fixées au cadre porteur (3) via un bras de roue (16), lequel est relié au cadre porteur (3) au moyen d'une articulation (17) d'axe sensiblement horizontal et transversal à la direction d'avancement (A). Pour les manoeuvres de demi-tour en bout de champ, les outils de traitement (4) sont soulevés et maintenus à distance du sol via un vérin de relevage (18). La machine (1) est alors dans une configuration dite intermédiaire telle que représentée sur la figure 1. Dans cette position intermédiaire, tous les outils de traitement (4) s'étendent derrière les roues (15) qui roulent sur le sol. Les roues (12) sont quant à elles dégagées du sol. Dans la phase de travail, il est important que les outils de traitement (4) suivent le relief du terrain, ainsi le cadre porteur (3) dispose dans sa partie frontale, d'un axe transversal (19) sensiblement horizontal et transversal à la direction d'avancement (A). Cet axe transversal (19) s'étend derrière et à proximité de l'articulation d'axe vertical (9). Le pivotement autour de cet axe transversal (19) est autorisé notamment lors de transport et lors du travail pour que la machine (1) puisse suivre le relief du terrain. L'articulation d'axe vertical (9) permet à la machine (1) le suivi du tracteur surtout dans les virages et fourrières. L'articulation transversale (19) est située proche de l'articulation d'axe verticale (9) de manière à assurer un comportement stable de la machine (1) durant le transport sur route et durant les manoeuvres de demi-tours.

La machine (1) dispose d'un système de report de charge (20) qui s'étend entre le cadre porteur (3) et le cadre d'accouplement (6). Le système de report de charge (20) permet d'exercer une force sur le cadre d'accouplement (6) dans au moins une configuration dite intermédiaire. Dans la configuration intermédiaire telle que représentée à la figure 1, tous les outils de traitement (4) sont disposés à l'arrière des roues (15) et une majorité des outils de traitement (4) sont soulevés et ne sont donc plus en contact avec le sol. Dans cette configuration intermédiaire, le centre de gravité de la machine (1) est positionné derrière les roues (15) ce qui entraîne un effort tendant à éloigner le cadre d'accouplement (6) du sol. Le système de report de charge (20) exerce ainsi une force opposée qui maintient la position de l'attelage trois points (5) du tracteur (2) et empêche les bras inférieurs de l'attelage trois points (5) de se soulever et de s'éloigner du sol. Cette force est appliquée notamment au niveau des attaches inférieures (7). Le système de report de charge (20) comporte un dispositif hydraulique tel qu'un actionneur relié à un circuit hydraulique (21) de la machine (1). Le vérin de relevage (18) est également relié au circuit hydraulique (21) de la machine (1). Le vérin de relevage (18) permet entre autres de placer la machine (1), depuis la cabine du tracteur (2), dans les différentes positions : travail, intermédiaire, transport. Le vérin de relevage (18) est du type double effet, il contrôle l'abaissement et le soulèvement des outils de traitement (4). Comme indiqué précédemment, le système de report de charge (20) est activé lorsque la machine (1) est dans la configuration dite intermédiaire de manière à appliquer une force à l'avant du cadre porteur (3) de la machine (1). Selon un autre exemple de réalisation, le vérin de relevage (18) est du type simple effet, ainsi il ne pourra agir que dans un sens pour soulever les outils de traitement (4). L'abaissement des outils de traitement (4) se fera par gravité.

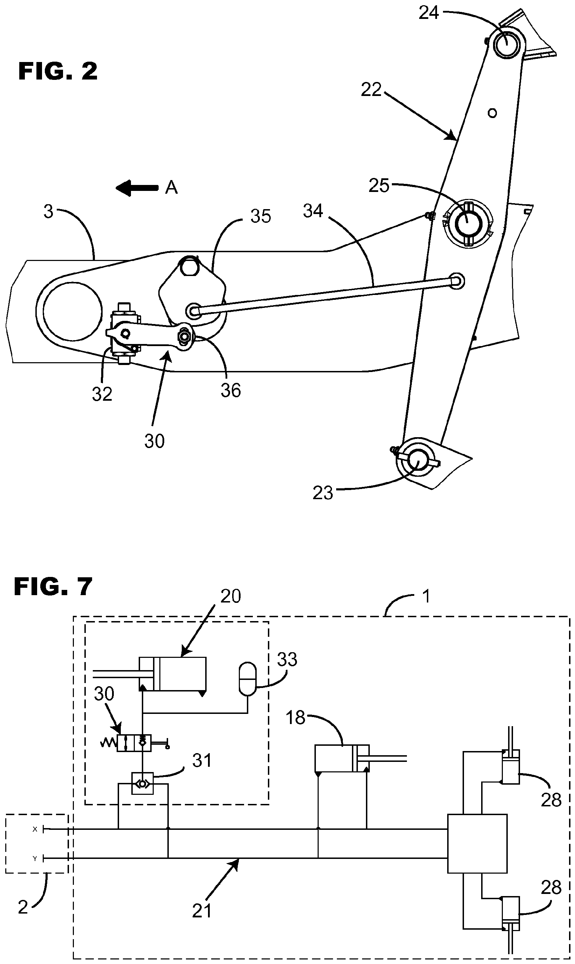

Selon une importante caractéristique de l'invention, la machine (1) comporte un dispositif (30) apte à isoler le circuit du système de report de charge (20) dans la configuration dite intermédiaire. Grâce à ce dispositif d'isolation (30), l'échange d'huile entre le système de report de charge (20) et le circuit de la machine (1) est empêché. L'huile reste confinée dans le circuit du système de report de charge (20). Avec le dispositif d'isolation (30), une mise en position flottante du distributeur par l'utilisateur lors des manoeuvres de demi-tour n'aura pas d'incidence sur le système de report de charge (20) et donc sur la force appliquée à l'avant du cadre porteur (3). Ce dispositif d'isolation (30) a une fonction de sécurité pour la machine (1) lorsque les outils de traitement (4) sont soulevés pour les manoeuvres. De cette manière, une action inadéquate sur le distributeur hydraulique n'aura pas d'incidence sur le système de report de charge (20). Le dispositif d'isolation (30) autorise le transfert d'huile dans et hors du circuit du système de report de charge (20) dans la position de travail et dans la position de transport. Dans ces deux positions, l'échange d'huile entre le système de report de charge (20), le circuit hydraulique (21) de la machine (1) et celui du tracteur (2) est autorisé. L'actionneur est par exemple un vérin à simple effet dont la petite chambre est reliée à un accumulateur (33). L'accumulateur (33) permet un pivotement du cadre porteur (3) autour de l'axe transversal (19) lors des demi-tours. La figure 7 représente de manière schématique une partie du circuit hydraulique (21) de la machine (1) dans la configuration intermédiaire ainsi que le circuit du système de report de charge (20).

D'une manière avantageuse, le circuit du système de report de charge (20) comporte un sélecteur de circuit (31). Le sélecteur de circuit (31) permet d'assurer que le système de report de charge (20) soit mis sous pression quel que soit le sens d'actionnement du distributeur par l'utilisateur pour soulever ou pour abaisser les outils de traitement (4) sur le sol. La pression d'huile nécessaire pour un fonctionnement efficace de ce dispositif d'isolation (30) est faible.

Selon une autre caractéristique avantageuse, le dispositif d'isolation (30) est combiné à un dispositif (32) mécanique, hydraulique ou électrique pour détecter la configuration des outils de traitement (4). Dans l'exemple de réalisation représenté, notamment à la figure 2, le dispositif (32) mécanique comporte une tringle (34), une came (35) et un galet (36). La tringle (34) est liée à un des outils de traitement (4) et d'autre part à la came (35). La tringle (34) est disposée à proximité des parties en mouvement ou qui pivotent lorsque la machine (1) passe d'une position de travail à une configuration dite intermédiaire, par exemple les outils de traitement (4) et/ou le bras de roue (15). Cette proximité de la tringle (34) et des parties en mouvement permet d'utiliser une bielle de longueur réduite. Une bielle de courte longueur facilite l'installation, assure une bonne précision de commande ainsi qu'une bonne tenue mécanique en fonctionnement. Le risque d'accumulation de fourrage sur la tringle (34) est limité. Ce dispositif (32) mécanique offre un encombrement compact. Avec un tel dispositif d'isolation (30) la machine (1) dispose d'un système de report de charge sécurisé et économique pour la configuration intermédiaire.

De manière alternative, la tringle (34) peut être liée directement ou indirectement à l'un au moins des outils de traitement (4). Selon une autre alternative, la tringle (34) est liée au bras de roue (16).

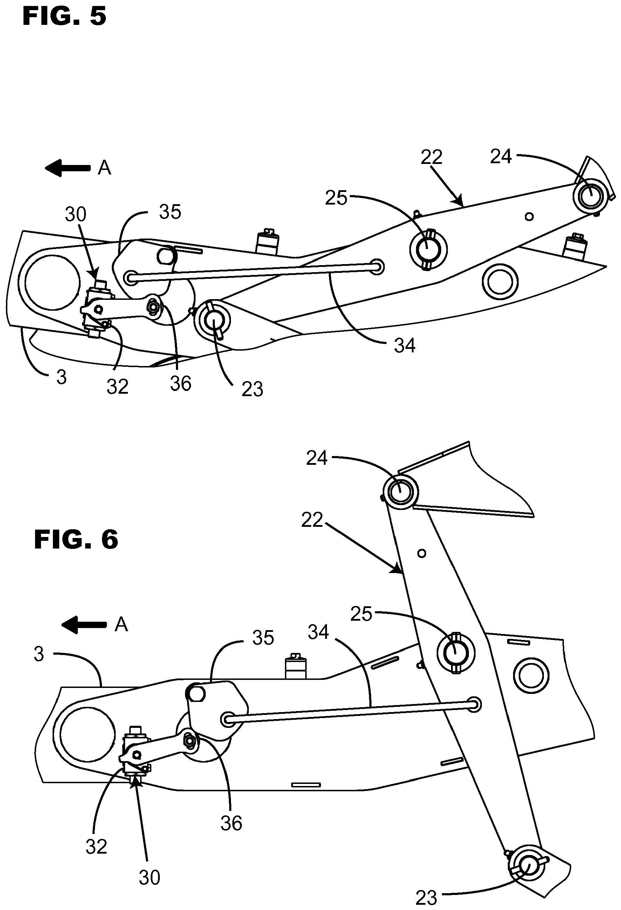

Le dispositif d'isolation (30) dispose de deux positions l'une qui autorise le passage du fluide et l'autre qui l'interdit. Le dispositif d'isolation (30) est par exemple un robinet, une vanne ou un distributeur. Sur la figure 7 est représenté un robinet à deux positions, l'une autorisant le passage de l'huile dans les deux sens et l'autre autorisant uniquement l'entrée d'huile dans l'actionneur du système de report de charge (20). Le robinet est représenté dans cette autre position à la figure 7. D'une manière particulièrement avantageuse, le dispositif d'isolation (30) comporte un clapet anti-retour. Ce clapet anti-retour sur ressort permet l'entrée d'huile et interdit la sortie de l'huile. Dans cette autre position, l'huile peut toujours être admise dans l'actionneur mais ne pourra pas s'écouler vers le réservoir du tracteur (2). Les différentes positions du dispositif d'isolation (30) sont représentées plus en détail sur les figures 2, 5 et 7. Ainsi, le dispositif d'isolation (30) est actif c'est-à-dire que le robinet est fermé lorsque la machine (1) est dans la configuration intermédiaire représentée aux figures 1 et 2. Dans la position de travail illustrée aux figures 3 et 5, le dispositif d'isolation (30) est inactif. Dans la position de transport illustrée aux figures 4 et 6, le dispositif d'isolation (30) est également inactif. La came (35) permet de piloter le déplacement du galet (36). Le galet (36) actionne le dispositif mécanique (32). La came (35) est tournante autour d'un pivot et dispose d'un profil extérieur symétrique. Le secteur angulaire actif du profil extérieur dans la configuration intermédiaire est celui qui s'étend à l'opposé du pivot de la came (35). Selon une alternative, le profil de la came est asymétrique.

Dans l'exemple de réalisation de la figure 1, on remarque que le bras de roue (16) et le vérin de relevage (18) sont reliés au moyen d'une bielle (22) respectivement via une articulation inférieure (23) et une articulation supérieure (24). La bielle (22) est quant à elle liée au cadre porteur (3) par une articulation intermédiaire (25). L'articulation intermédiaire (25), l'articulation inférieure (23) et l'articulation supérieure (24) dispose d'un axe sensiblement horizontal et perpendiculaire à la direction d'avancement (A). L'articulation intermédiaire (25) s'étend entre l'articulation inférieure (23) et l'articulation supérieure (24), plus précisément sur la droite passant par l'articulation inférieure (23) et l'articulation supérieure (24). L'articulation intermédiaire (25) est positionnée plus proche de l'articulation supérieure (24) que de l'articulation inférieure (23). Le vérin de relevage (18) est relié de manière indirecte aux outils de traitement (4) via une bielle triangulaire (26) et une articulation supplémentaire (27). Lorsque la tige du vérin de relevage (18) se rétracte, les outils de traitement (4) se soulèvent et s'éloignent de la surface du sol. Les roues (15) avec le bras de roue (16) pivotent dans le sens antihoraire en direction du sol autour de l'articulation (17). Sur les figures, on remarque que la tringle (34) est reliée à la bielle (22). Lors du travail, les roues (15) de la machine (1) sont relevées, tel que visible à la figure 3. Ce sont les roues (12) des outils de traitement (4) qui roulent sur le sol pour que les fourches (14) puissent suivre au plus près les ondulations du terrain.

Dans une alternative, un dispositif hydraulique ou électrique comporte au moins un capteur de position et/ou au moins un capteur de pression destiné à détecter la configuration de la machine (1) de manière à pouvoir piloter le dispositif d'isolation (30).

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Machine (1) agricole traînée comportant un cadre porteur (3) muni d'outils de traitement (4) et pouvant être relié à l'attelage trois points (5) d'un tracteur (2) au moyen d'un cadre d'accouplement (6), le cadre porteur (3) s'appuyant sur le sol au moins au transport au moyen de roues (15) et un système de report de charge (20) s'étendant entre le cadre porteur (3) et le cadre d'accouplement (6) pour exercer une force sur le cadre d'accouplement (6) dans au moins une configuration dite intermédiaire dans laquelle une majorité des outils de traitement (4) ne sont pas en contact avec le sol et sont disposés à l'arrière des roues (15), ***caractérisée en ce qu'***elle comporte un dispositif (30) apte à isoler le circuit hydraulique du système de report de charge (20) dans la configuration dite intermédiaire.

2. Machine agricole selon la revendication 1, ***caractérisée en ce que*** le circuit du système de report de charge (20) comporte un sélecteur de circuit (31).

3. Machine agricole selon la revendication 1 ou 2, ***caractérisée en ce que*** le dispositif d'isolation (30) est combiné à un dispositif mécanique, hydraulique ou électrique pour détecter la configuration des outils de traitement (4).

4. Machine agricole selon l'une des revendications 1 à 3, ***caractérisée en ce que*** le dispositif d'isolation (30) comporte un clapet anti-retour.

5. Machine agricole selon la revendication 3, ***caractérisée en ce que*** le dispositif (32) mécanique comporte une tringle (34), une came (35) et un galet (36), la tringle (34) est liée d'une part directement ou indirectement à au moins un outil de traitement (4) ou au bras de roue (16) et d'autre part à la came (35), la came (35) guide le galet (36) qui pilote le dispositif d'isolation (30).

6. Machine agricole selon la revendication 5, ***caractérisée en ce que*** la tringle (34) est disposée à proximité des parties en mouvement tels que les outils de traitement (4) ou le bras de roue (16).

7. Machine agricole selon la revendication 3, ***caractérisée en ce que*** le dispositif hydraulique ou électrique comporte également au moins un capteur de position ou au moins un capteur de pression destiné à détecter la configuration de la machine (1).

8. Machine agricole selon l'une quelconque des revendications 1 à 7, ***caractérisée en ce que*** le dispositif d'isolation (30) est un robinet, une vanne ou un distributeur.

9. Machine agricole selon l'une quelconque des revendications 1 à 8, ***caractérisée en ce que*** le dispositif d'isolation (30) autorise le transfert d'huile dans et hors du circuit du système de report de charge dans une position de travail ou dans une position de transport.

10. Machine agricole selon l'une quelconque des revendications 1 à 9, ***caractérisée en ce qu'***il s'agit d'une machine de fenaison, plus particulièrement d'une faneuse.

## Patentansprüche

1. Landwirtschaftliche Anhängemaschine (1) mit einem Tragrahmen (3), der mit Verarbeitungswerkzeugen (4) ausgestattet ist und mit der Dreipunktkupplung (5) eines Traktors (2) mittels eines Kupplungsrahmens (6) verbunden werden kann, wobei der Tragrahmen (3) sich mindestens beim Transport auf dem Boden abstützt mittels Rädern (15) und eines Lastübertragungssystems (20), das sich zwischen dem Tragrahmen (3) und dem Kupplungsrahmen (6) erstreckt, um auf den Kupplungsrahmen (6) in mindestens einer so genannten Zwischenkonfiguration, in der eine Mehrheit der Verarbeitungswerkzeuge (4) nicht in Kontakt mit dem Boden ist und hinter den Rädern (15) angeordnet ist, eine Kraft auszuüben, ***dadurch gekennzeichnet, dass*** sie eine Vorrichtung (30) umfasst, die imstande ist, den Hydraulikkreis vom Lastübertragungssystem (20) in der so genannten Zwischenkonfiguration zu isolieren.

2. Landwirtschaftliche Maschine nach Anspruch 1, ***dadurch gekennzeichnet, dass*** der Kreislauf des Lastübertragungssystems (20) ein Wechselventil (31) umfasst.

3. Landwirtschaftliche Maschine nach Anspruch 1 oder 2, ***dadurch gekennzeichnet, dass*** die Isolationsvorrichtung (30) mit einer mechanischen, hydraulischen oder elektrischen Vorrichtung kombiniert wird, um die Konfiguration der Verarbeitungswerkzeuge (4) zu erkennen.

4. Landwirtschaftliche Maschine nach einem der Ansprüche 1 bis 3, ***dadurch gekennzeichnet, dass*** die Isolationsvorrichtung (30) ein Drosselventil umfasst.

5. Landwirtschaftliche Maschine nach Anspruch 3, ***dadurch gekennzeichnet, dass*** die mechanische Vorrichtung (32) ein Gestänge (34), eine Nocke (35) und eine Rolle (36) umfasst, das Gestänge (34) einerseits direkt oder indirekt mit mindestens einem Verarbeitungswerkzeug (4) oder mit dem Radarm (16) und andererseits mit der Nocke (35) verbunden ist, die Nocke (35) die Rolle (36) führt, welche die Isolationsvorrichtung (30) steuert.

6. Landwirtschaftliche Maschine nach Anspruch 5, ***dadurch gekennzeichnet, dass*** das Gestänge (34) in der Nähe der sich bewegenden Teile angeordnet ist, wie etwa der Verarbeitungswerkzeuge (4) oder des Radarms (16).

7. Landwirtschaftliche Maschine nach Anspruch 3, ***dadurch gekennzeichnet, dass*** die hydraulische oder elektrische Vorrichtung ebenfalls mindestens einen Positionssensor oder mindestens einen Drucksensor umfasst, der dazu bestimmt ist, die Konfiguration der Maschine (1) zu erkennen.

8. Landwirtschaftliche Maschine nach irgendeinem der Ansprüche 1 bis 7, ***dadurch gekennzeichnet, dass*** die Isolationsvorrichtung (30) ein Hahn, ein Ventil oder ein Verteiler ist.

9. Landwirtschaftliche Maschine nach irgendeinem der Ansprüche 1 bis 8, ***dadurch gekennzeichnet, dass*** die Isolationsvorrichtung (30) den Öldurchfluss in und aus dem Kreislauf des Lastübertragungssystems in einer Arbeitsstellung oder in einer Transportstellung zulässt.

10. Landwirtschaftliche Maschine nach irgendeinem der Ansprüche 1 bis 9, ***dadurch gekennzeichnet, dass*** es sich um eine Heuwerbungsmaschine, insbesondere um einen Heuwender handelt.

## Claims

1. Towed agricultural machine (1) including a carrier frame (3) fitted with conditioning tools (4) and able to be connected to the three-point hitch (5) of a tractor (2) by means of a coupling frame (6), the carrier frame (3) resting on the ground at least during transport by means of wheels (15) and a load transfer system (20) extending between the carrier frame (3) and the coupling frame (6) to exert a force on the coupling frame (6) in at least one so-called intermediate configuration in which the majority of the conditioning tools (4) are not in contact with the soil and are positioned behind the wheels (15), ***characterised in that*** it includes a device (30) that can isolate the hydraulic circuit of the load transfer system (20) in the so-called intermediate configuration.

2. Agricultural machine according to claim 1, ***characterised in that*** the circuit of the load transfer system (20) includes a shuttle valve (31).

3. Agricultural machine according to claim 1 or 2, ***characterised in that*** the isolation device (30) is combined with a mechanical, hydraulic or electric device to detect the configuration of the conditioning tools (4).

4. Agricultural machine according to one of the claims 1 to 3, ***characterised in that*** the isolation device (30) includes a non-return valve.

5. Agricultural machine according to claim 3, ***characterised in that*** the mechanical device (32) includes a rod (34), a cam (35) and a roller (36), the rod (34) being connected, on one hand, directly or indirectly to at least one conditioning tool (4) or to the wheel arm (16) and, on the other hand, to the cam (35), the cam (35) guiding the roller (36) that controls the isolation device (30).

6. Agricultural machine according to claim 5, ***characterised in that*** the rod (34) is positioned nearby the moving parts such as the conditioning tools (4) or the wheel arm (16).

7. Agricultural machine according to claim 3, ***characterised in that*** the hydraulic or electric device also includes at least one position sensor or at least one pressure sensor designed to detect the configuration of the machine (1).

8. Agricultural machine according to any one of the claims 1 to 7, ***characterised in that*** the isolation device (30) includes a cock, a valve or a distributor.

9. Agricultural machine according to any one of the claims 1 to 8, ***characterised in that*** the isolation device (30) allows oil to be transferred into and out of the circuit of the load transfer system in a work position or in a transport position.

10. Agricultural machine according to any one of the claims 1 to 9, ***characterised in that*** it is a haymaking machine, more specifically a tedder.
